**Europäisches Patentamt**

**European Patent Office**

**Office européen des brevets**

(19)

(11) Veröffentlichungsnummer : **0 038 068**
**B1**

(12) # EUROPÄISCHE PATENTSCHRIFT

(45) Veröffentlichungstag der Patentschrift :
25.07.84

(51) Int. Cl.³ : **A 47 B 81/06, F 16 M 11/12**

(21) Anmeldenummer : **81102827.3**

(22) Anmeldetag : **13.04.81**

(54) **Anordnung zum Befestigen eines Monitors an einer Textstation.**

(30) Priorität : **15.04.80 DE 3014478**

(43) Veröffentlichungstag der Anmeldung :
**21.10.81 Patentblatt 81/42**

(45) Bekanntmachung des Hinweises auf die Patenterteilung : **25.07.84 Patentblatt 84/30**

(84) Benannte Vertragsstaaten :
**CH FR GB IT LI NL SE**

(56) Entgegenhaltungen :
**EP-A- 0 009 463**
**EP-A- 0 010 491**
**CH-A- 472 625**
**DE-A- 2 360 616**
**FR-A- 2 330 949**
**US-A- 4 121 280**
**US-A- 4 183 489**

(73) Patentinhaber : **SIEMENS AKTIENGESELLSCHAFT**
**Berlin und München Wittelsbacherplatz 2**
**D-8000 München 2 (DE)**

(72) Erfinder : **Scheibenpflug, Konrad, Ing. (grad.)**
**Kerschensteinerstrasse 20**
**D-8034 Germering (DE)**

EP 0 038 068 B1

**Beschreibung**

Die Erfindung bezieht sich auf eine Anordnung zum Befestigen eines Monitors an einer Textstation entsprechend dem Oberbegriff des Anspruchs 1.

Es ist bereits allgemein bekannt, an Textstationen, wie beispielsweise Textbe- oder -verarbeitungseinrichtungen einen Monitor anzuordnen, auf dem Texte vor einer Ausgabe an einem Druckwerk darstellbar sind. Es wäre denkbar, einen derartigen Monitor direkt über dem Druckwerk der Textstation anzuordnen. Bei einer derartigen Anordnung muß darauf geachtet werden, daß das vom Druckwerk zu bedruckende Papier den Bildschirm des Monitors nicht verdeckt. Häufig ist auch eine verstellbare Anordnung des Monitors auf der Textstation nicht ohne weiteres möglich.

Aus der US-PS 4,183,489 ist eine Anordnung zum schwenkbaren Befestigen eines Geräts an einer Wand bekannt. Bei dieser bekannten Anordnung ist ein erster Ausleger schwenkbar an der Wand befestigt. Auf diesem Ausleger ist eine weiterer Ausleger senkrecht nach oben gerichtet angeordnet und an dessen oberem Ende ist eine Plattform befestigt, auf der ein Gerät, beispielsweise ein Telefonapparat angeordnet werden kann. Diese bekannte Anordnung ermöglicht eine vielseitige Einstellung, da das Gerät sowohl schwenkbar als auch drehbar angeordnet ist.

Die FR-PS 2,330,949 offenbart eine Anordnung zum Befestigen eines Fernsehgeräts an einer Gebäudewand. Auch bei dieser bekannten Anordnung ist der Ausleger schwenkbar an der Wand befestigt und am anderen Ende des Auslegers ist das Fernsehgerät drehbar angeordnet.

Die bekannten Anordnungen sind nicht für eine Befestigung eines Monitors an einer Textstation vorgesehen. Der Erfindung liegt daher die Aufgabe zugrunde, eine Anordnung zum Befestigen eines Monitors an einer Textstation anzugeben, bei der die Stellung des Monitors an die jeweiligen Wünsche des Benutzers auf einfache Weise angepaßt werden kann.

Erfindungsgemäß wird die Aufgabe bei der Anordnung der eingangs genannten Art durch die im kennzeichnenden Teil des Anspruchs 1 angegebenen Merkmale gelöst.

Die Anordnung gemäß der Erfindung hat den Vorteil, daß sie infolge der Schwenkbarkeit des Auslegers auf der Säule und der Drehbarkeit des Monitors des auf dem Ausleger eine Vielzahl von Einstellungen des Monitors ermöglicht. Durch die Verwendung der kurbelähnlichen Anordnung kann die Entfernung zwischen dem Betrachter und dem Bildschirm auf einfache Weise verändert werden. Ebenso können, in Abhängigkeit von den jeweiligen Lichtverhältnissen, Spiegelungen am Bildschirm infolge der Schwenkbarkeit, der Drehbarkeit und der Neigbarkeit des Monitors vermieden werden. In Abhängigkeit von den Wünschen des jeweiligen Benutzers kann die Säule links oder rechts an der Textstation angeordnet werden.

Die schwenkbare Befestigung des Auslegers an der Säule wird in vorteilhafter Weise dadurch erreicht, daß auf der Säule eine Buchse angeordnet ist, auf der ein das Unterteil des Auslegers bildender Träger mittels eines Bolzens und einer Ansatzschraube schwenkbar befestigt ist. Insbesondere ist es vorteilhaft, wenn die Buchse mittels einer Achse an der Säule drehgesichert befestigt ist.

Zur drehbaren Befestigung des Monitors auf dem Ausleger ist es vorteilhaft, wenn am Monitor eine Buchse angeordnet ist, die an einem das Unterteil des Auslegers bildenden Träger mittels eines Bolzens und einer Ansatzschraube drehbar befestigt ist.

Die gewünschte Schwergängigkeit der schwenkbaren und drehbaren Lagerung wird auf einfache Weise dadurch erreicht, daß zwischen der Ansatzschraube und dem Träger eine Blattfeder angeordnet ist.

Die Anordnung erfordert einen geringen Aufwand, wenn die beiden Buchsen gleichartig ausgebildet sind.

Zur neigbaren Befestigung des Monitors ist es günstig, wenn mindestens ein Montagewinkel vorgesehen ist, der mittels einer Achse am Bolzen und über diesen an der Buchse neigbar angeordnet ist und an dem der Monitor befestigt ist.

Der Anschluß der Monitors an der Textstation wird in vorteilhafter Weise dadurch erreicht, daß das Anschlußkabel des Monitors durch die Buchsen, den Ausleger und die Säule zur Textstation geführt wird.

Im folgenden wird ein Ausführungsbeispiel der Anordnung gemäß der Erfindung anhand von Zeichnungen beschrieben. Es zeigen :

    Figur 1   eine Frontansicht der Anordnung,

    Figur 2   eine Seitenansicht der Anordnung,

    Figur 3   eine Draufsicht der Anordnung,

    Figur 4   ein Schnittbild durch einen Ausleger und daran befestigte Buchsen,

    Figur 5   ein erstes Schnittbild durch eine am Monitor befestigte Buchse,

    Figur 6   ein zweites Schnittbild der am Monitor befestigten Buchse.

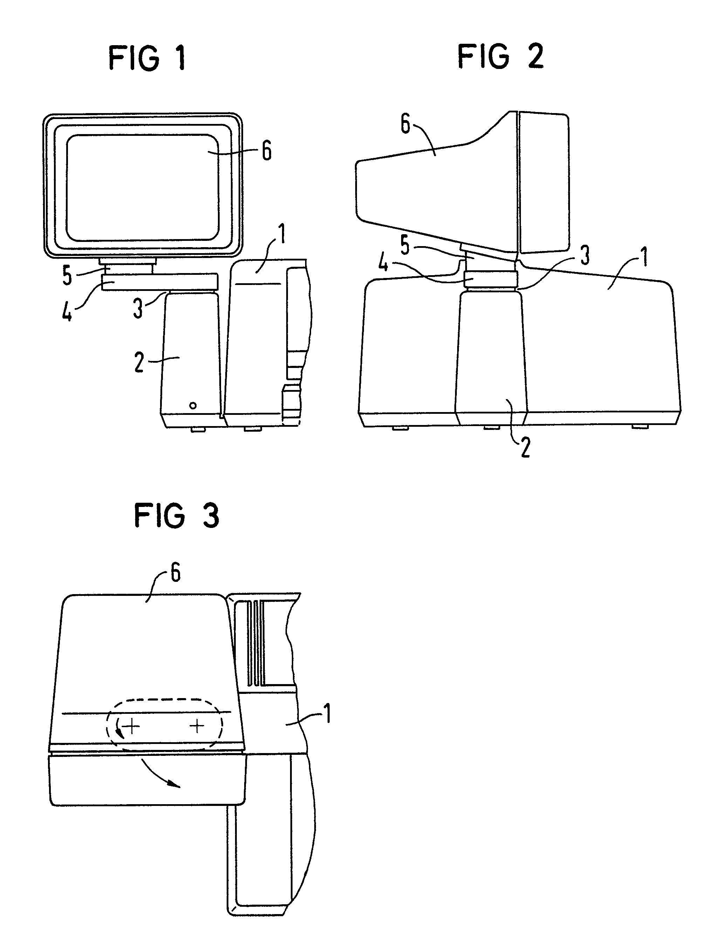

Bei der in Fig. 1 dargestellten Anordnung ist an einer Textstation 1, die üblicherweise eine Tastatur und ein Druckwerk enthält und beispielsweise als Textbearbeitungs-, -verarbeitungs- und/oder -übertragungsstation ausgebildet ist, eine Säule 2 befestigt. Über eine Buchse 3 ist ein Ausleger 4 schwenkbar angeordnet. Auf dem Ausleger 4 ist mittels einer weiteren Buchse 5 ein Monitor 6 drehbar und neigbar angeordnet.

Wie in Fig. 2 dargestellt ist, wird der Monitor 6 vorzugsweise an einer Seite der Textstation 1 angeordnet. Eine an der Textstation vorgesehene Tastatur wird zweckmäßigerweise so ausgestaltet, daß diese vor der Textstation verschiebbar ist, um eine Stellung parallel zum Bildschirm des Monitors 6 zu erreichen.

Aus der Darstellung in Fig. 3 ist zu erkennen, daß durch die Verwendung der kurbelähnlichen Anordnung eine Vielzahl von Einstellungsmöglichkeiten vorhanden ist, da einerseits der Ausleger 4 um die Säule 2 schwenkbar ist und andererseits der Monitor 6 auf dem Ausleger 4 drehbar ist.

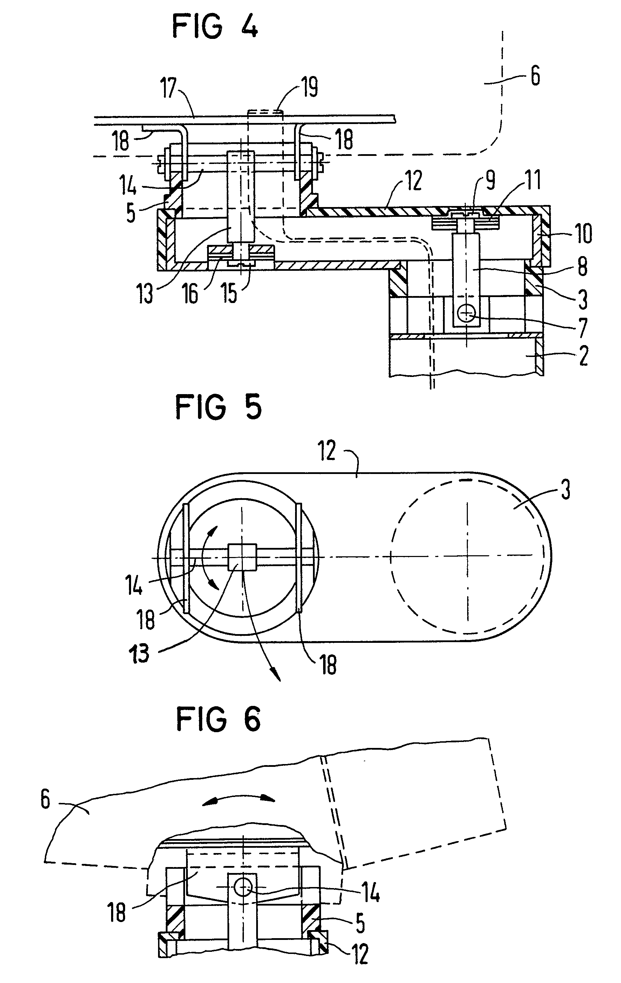

Bei dem in Fig. 4 dargestellten Schnittbild ist die Buchse 3 mittels einer Achse 7 drehgesichert an der Säule 2 befestigt. Mittels eines Bolzens 8 und einer Ansatzschraube 9 ist an der Buchse ein Träger 10 befestigt, der beispielsweise aus Aludruckguß besteht und das Unterteil des Auslegers 4 bildet. Um eine Schwergängigkeit beim Schwenken des Auslegers 4 zu erreichen, ist die Buchse 3 mit dem Träger 10 über eine Blattfeder 11 zusammengespannt.

Über dem Träger 10 ist eine Abdeckung 12 aus Kunststoff angeordnet. Auf dieser Abdeckung 12 sitzt die Buchse 5, die gleichartig ausgebildet ist wie die Buchse 3. Durch die Buchse 5 und einen Bolzen 13 wird eine Achse 14 geführt. Mittels einer Ansatzschraube 15 und einer Blattfeder 16 wird die Buchse mit der Abdeckung 12 und dem Träger 10 zusammengespannt. Auch hier wird durch die Verwendung der Blattfeder 16 eine Schwergängigkeit bei der Drehung des Monitors 6 erreicht. An einer Montageplatte 17 sind zwei Montagewinkel 18 angeordnet, die mit Bohrungen für die Achse 14 versehen sind. Durch die Verwendung dieser Montagewinkel 18 ist der Monitor 6 auf der Buchse 5 neigbar befestigt. Das Anschlußkabel 19 des Monitors 6 wird durch die Buchse 5, den aus dem Träger 10 und der Abdeckung 12 gebildeten Ausleger 4, die Buchse 3 und die Säule 2 zur Textstation 1 geführt.

Bei dem in Fig. 5 dargestellten Schnittbild sind die Montagewinkel 18 nochmals dargestellt, durch die die Achse 14 hindurchragt, welche wiederum durch eine Bohrung im Bolzen 13 geführt ist. Aus dem in Fig. 6 dargestellten weiteren Schnittbild ist zu erkennen, daß der Monitor 6 durch die Verwendung der Montagewinkel 18, die in der Achse 14 gelagert sind, auf der Buchse 5 neigbar angeordnet ist.

**Ansprüche**

1. Anordnung zum Befestigen eines Monitors (6) an einer Textstation (1), wobei die Anordnung einen Kurbel bildenden schwenkbaren Ausleger (4) aufweist, an dem der Monitor (6) drehbar befestigt ist, dadurch gekennzeichnet, daß eine Säule (2) vorgesehen ist, die mit ihrem unteren Ende seitlich an der Textstation (1) an einer Bodenwanne der Textstation (1) angebracht ist, daß am oberen Ende der Säule (2) der Ausleger (4) schwenkbar angeordnet ist und daß der Monitor (6) drehbar und neigbar am Ausleger (4) angeordnet ist.

2. Anordnung nach Anspruch 1, dadurch gekennzeichnet, daß auf der Säule (2) eine Buchse (3) angeordnet ist, auf der ein das Unterteil des Auslegers (4) bildender Träger (10) mit einem Bolzen (8) und einer Ansatzschraube (9) schwenkbar befestigt ist.

3. Anordnung nach Anspruch 2, dadurch gekennzeichnet, daß die Buchse (3) mittels einer Achse (7) an der Säule (2) drehgesichert befestigt ist.

4. Anordnung nach einem der Ansprüche 1 bis 3, dadurch gekennzeichnet, daß am Monitor (6) eine Buchse (15) angeordnet ist, die an einem das Unterteil des Auslegers (4) bildenden Träger (10) mittels eines Bolzens (13) und einer Ansatzschraube (15) drehbar befestigt ist.

5. Anordnung nach einem der Ansprüche 2 bis 4, dadurch gekennzeichnet, daß zwischen der Ansatzschraube (9, 15) und dem Träger (10) eine Blattfeder (11, 16) angeordnet ist.

6. Anordnung nach einem der Ansprüche 2 bis 5, dadurch gekennzeichnet, daß die beiden Buchsen (3, 5) gleichartig ausgebildet sind.

7. Anordnung nach einem der Ansprüche 4 bis 6, dadurch gekennzeichnet, daß mindestens ein Montagewinkel (13) vorgesehen ist, der mittels einer Achse (14) am Bolzen (13) und über diesen an der Buchse (5) neigbar angeordnet ist, und an dem der Monitor (6) befestigt ist.

8. Anordnung nach einem der vorangehenden Ansprüche, dadurch gekennzeichnet, daß das Anschlußkabel (19) des Monitors (6) durch die Buchsen (3, 5) den Ausleger (4) und die Säule (2) zur Textstation (1) geführt ist.

**Claims**

1. Arrangement for securing a monitor (6) to a text station (1), where the arrangement has a swivel arm (4) which forms a crank and to which the monitor (6) is pivotably secured, characterised in that there is provided a column (2) which has its lower end laterally mounted on the text station (1) on a base trough of the next station (1), that the arm (4) is pivotably arranged on the upper end of the column (2), and that the monitor (6) is pivotably and inclinably arranged on the arm (4).

2. Arrangement as claimed in claim 1, characterised in that on the column (2) is arranged a bush (3) on which a carrier (10), which forms the lower part of the arm (4), is pivotably secured by means of a bolt (8) and a shoulder screw (9).

3. Arrangement as claimed in claim 2, characterised in that the bush (3) is secured to the column (2) by means of a shaft (7) so as to be swivel-proof.

4. Arrangement as claimed in one of claims 1 to 3, characterised in that on the monitor (6) is arranged a bush (5) which is pivotably secured to a carrier (10), which forms the lower part of the arm (4), by means of a bolt (13) and a shoulder screw (15).

5. Arrangement as claimed in one of claims 2 to 4, characterized in that a flat spring (11, 16) is arranged between the shoulder screw (9, 15) and the carrier (10).

6. Arrangement as claimed in one of claims 2 to 5, characterized in that the two bushes (3, 5) are similarly designed.

7. Arrangement as claimed in one of claims 4 to 6, characterised in that there is provided at least one mounting square (13) which is arranged on the bolt (13) by means of a shaft (14) and which is inclinably arranged on the bush (5) via said bolt and to which the monitor (6) is secured.

8. Arrangement as claimed in one of the preceding claims, characterised in that the connection cable (19) of the monitor (6) is led to the text station (1) through the bushes (3, 5), the arm (4) and the column (2).

## Revendications

1. Dispositif de fixation d'un moniteur (6) à une installation de traitement de textes (1), ce dispositif comportant un bras en console (4) apte à pivoter, constituant une manivelle et sur lequel le moniteur (6) est fixé avec possibilité de rotation, caractérisé par le fait qu'il est prévu une colonne (2) qui est montée au moyen de son extrémité inférieure, latéralement sur l'installation de traitement de textes (1) dans une cuvette de sol de cette installation, que le bras en console (4) est monté de façon à pouvoir pivoter sur l'extrémité supérieure de la colonne (2) et que le moniteur (6) est monté de façon à pouvoir tourner et à pouvoir être incliné sur le bras en console (4).

2. Dispositif suivant la revendication 1, caractérisé par le fait que sur la colonne (2) se trouve disposé un manchon (3) sur lequel le support (10) constituant la partie inférieure du bras en console (4) est fixé de façon à pouvoir pivoter au moyen d'un tourbillon (8) et d'un boulon à épaulement (9).

3. Dispositif suivant la revendication 2, caractérisé par le fait que le manchon (3) est fixé avec blocage contre toute rotation sur la colonne (2) au moyen d'un bloc (7).

4. Dispositif suivant l'une des revendications 1 à 3, caractérisé par le fait que sur le moniteur (5) est disposé un manchon (5) qui est fixé de manière à pouvoir pivoter, au moyen d'un tourillon (13) et d'un boulon à épaulement (15), sur un support (10) constituant la partie inférieure du bras en console (4).

5. Dispositif suivant l'une des revendications 1 à 4, caractérisé par le fait qu'un ressort à lames (11, 16) est disposé entre le boulon à épaulement (9, 15) et le support (10).

6. Dispositif suivant l'une des revendications 2 à 5, caractérisé par le fait que les deux manchons (3, 5) possèdent des constitutions identiques.

7. Dispositif suivant l'une des revendications 4 à 6, caractérisé par le fait qu'il est prévu au moins une équerre de montage (13) qui est disposée de façon à pouvoir être inclinée, au moyen d'un axe (14) sur le tourillon (13) et, par l'intermédiaire de cet axe, sur le manchon (5), et à laquelle est fixé le moniteur (6).

8. Dispositif suivant l'une des revendications précédentes, caractérisé par le fait que le câble de raccordement (19) du moniteur (6) passe à travers les manchons (3, 5), le bras en console (4) et la colonne (2) pour aboutir à l'installation de traitement de textes (1).

## FIG 1

## FIG 2

## FIG 3

# FIG 4

# FIG 5

# FIG 6